# EUROPEAN PATENT APPLICATION

(11) **EP 3 308 916 A1**
(43) Date of publication of application: **18.04.2018**
(21) Application number: 15894848.9
(22) Date of filing: 12.06.2015
(51) Int. Cl.: B27D 1/04, B32B 7/12, B32B 21/13

(54) **TABLETOP FOR MANUFACTURING CARAVAN FURNITURE AND METHOD FOR PRODUCING SAID TABLETOP**

(71) Applicant: Grupo Garnica Plywood, S.A., 26007 Logroño (La Rioja) (ES)
(72) Inventor: HERNANZ, Guillermo, E-26007 Logroño (La Rioja) (ES); BARRAGAN, Enrique, E-26007 Logroño (La Rioja) (ES); MARTINEZ, Bruno, E-26007 Logroño (La Rioja) (ES); ALBIÑANA, Juan, E-26007 Logroño (La Rioja) (ES)
(74) Representative: Herrero & Asociados, S.L.
(86) International application number: PCT/ES2015/070464
(87) International publication number: WO 2016/198705

(57) **Abstract**

The present invention relates to a method of manufacturing a plywood board for furniture for caravans, which comprises stacking an odd number of peeled poplar veneers to form a veneer core, and placing on said core a first and a second engineered veneer to form the face and the back of the board, the assembly of veneers finally being pressed so that they remain attached to one another. The invention also relates to a plywood board obtained by means of said method. The invention provides a cost-effective, high-quality and lightweight plywood board suitable for manufacturing furniture for caravans or similar recreational vehicles.

## Description

### Technical Field of the Invention

The present invention relates to a plywood board for manufacturing furniture for caravans, and to a method of producing said plywood board.

An object of the invention is to produce, in a simple and cost-effective manner, a high-quality, lightweight plywood board suitable for manufacturing furniture for caravans or similar recreational vehicles.

### Background of the Invention

Conventionally, furniture for caravans is manufactured from boards derived from wood, where the most widely used among them are poplar plywood boards due to their optimal weight to strength ratio. The plywood board is formed by an odd-numbered stack of peeled poplar veneers, in which the veneers arranged in an even-numbered position (counter-veneers) are those which receive adhesive on both faces and have their grain perpendicular to the veneers arranged in an odd-numbered position (central veneers). Said stack of veneers forms the core of the board, which is complemented with an upper and a lower veneer, forming the face and the back of the board, where the board is finished by applying heat on and pressing the assembly of veneers.

In more detail, the conventional process of producing a plywood board comprises the following steps:
a) transporting wood logs to the factory
b) stripping the bark off the wood logs;
c) peeling the wood logs by rotating the wood logs on a blade to produce the respective veneers;
d) drying the veneers;
e) gluing the counter-veneers of the board to be produced;
f) stacking veneers, including the face and the back;
g) hot pressing the assembly of veneers;
h) repairing (applying putty on the faces)
i) performing calibration and longitudinal and cross sanding.

Plywood boards thus produced have great dimensional stability compared to a solid wood board and are the type of board having the best weight to performance (dimensional stability, mechanical strength, moisture resistance) ratio compared to panels made of other materials, in addition to being the only structural board suitable for use outdoors and used in harsh environments, such as in the nautical sector, for example.

Furthermore the plywood board for caravans must be a very stable, lightweight board, which is achieved using very lightweight poplar clones, selecting the veneers after very careful drying to obtain crack-free whole veneers. At the same time, it requires faces which allow a very good surface finish, suitable for the covering thereof with decorative paper wallpapers, vinyl wallpapers, polypropylene wallpapers, etc., with no surface defects.

Finished plywood boards are supplied to the recreational vehicle manufacturer who introduces the boards into a numerical control machine tool to enable performing the corresponding cutting of the different parts forming the furniture of the caravan, making maximum use of the board to make the furniture.

Numerical control machines require a very flat board, because if the board is bent the cutting many not be performed satisfactorily, and said board must have a perfect surface finish so that all the resulting parts are well made and there are no rejections which would lead to a high replacement cost since this part would have to be made manually.

Finally, being lightweight and having a good strength are fundamental because the heavier the caravans the higher the fuel consumption for moving them and lightweight poplar clones successfully achieve both features. A board between 390 and 430 kg per m³, a weight that is much lower than other boards of similar strengths (okoume board, pinewood board, birchwood board, Chinese poplar board, etc.) is obtained.

Other desired requirements for boards of this type are:
- surface hardness, so that the board withstands possible blows and impacts once laminated and the rapid deterioration of the components installed in the caravan is thereby prevented;
- lightness, which results in the board contributing the least possible weight to the caravan and thereby contributing to a lower fuel expenditure when using the caravan;
- high screw withdrawal strength, preventing deterioration of the areas of the board subject to the stress of moving parts or hinges;
- faces of the board with very subtle colorations which prevent eventual observable changes in hue when decorative papers of low grammage and opacity are used.

A known type of plywood board for caravans is formed by an inner poplar veneer core, and a face and a back made of African nutmeg wood (also known as false nutmeg or ilomba), which is a type of wood having a hardness and a surface quality that are superior to poplar, with fewer changes in hue and discolorations, and with fewer knots and cracks.

However, African nutmeg is more expensive than poplar as it is a tropical wood and is therefore less sustainable than poplar from plantations. Furthermore, the availability and quality of African nutmeg is on the decline today, which will entail an increase in complaints due to surface quality defects.

To overcome the problems of such boards, another type of plywood boards for caravans, consisting of finishing the board with faces and backs with fine MDF (medium-density fiberboard) veneers <1.2 mm thick, have been developed.

An MDF board is a panel made from wood fibers (that have been previously defibered and from which lignin has been eliminated) bound together with synthetic resins by means of applying a high pressure and heat in dry conditions until obtaining a medium density. It has a uniform and homogenous structure and a fine texture which allows its faces and edges to have a perfect finish.

It is worked almost the same way as solid wood, where it can be milled and carved in its entirety. Unlike solid wood, its dimensional stability is optimal, but its weight is extremely high. It constitutes an excellent base for wood veneers and is perfect for lacquering or painting, and can be readily glued (with white glue) without any problem.

It is usually found on the market today as a medium or dark brown, low-cost board that is used for many applications. It is recommended for making all types of (functional or artistic) furniture in which weight does not entail a problem.

MDF boards are produced using selected, bark-stripped fresh pine trunks coming from plantations generally managed under the concept of continuous and permanent reforestation. After first stripping off their barks, roundwoods are reduced to chips which are washed and then subjected to a thermomechanical defibering process. The fiber is mixed with additives (resin, wax and urea) and finally goes through a pressing process in which pressure and temperature are applied, thereby giving rise to the MDF board.

With respect to the application of MDF as a laminated product in manufacturing caravan components, it has the advantages of having a hardness and surface quality that are superior to African nutmeg, without changes in hue or discolorations, and no knots or cracks and no need to perform any repair with putty. However, it has the drawbacks of being heavier, less moisture resistant (it swells more) and having lower screw withdrawal strength.

There is therefore a need in this sector of the art for a method of producing plywood boards for manufacturing furniture for caravans which allows producing boards with excellent mechanical properties, a low weight, a high surface finish quality, great moisture resistance and a low manufacturing cost, using sustainable wood species.

### Description of the Invention

The present invention solves the aforementioned drawbacks of the boards of this type known in the state of the art by means of using engineered veneer, also known as prefabricated veneer or man-made veneer, to form the face and the back of the board, which allows the boards produced using the method of the invention to be lightweight, high-quality and cost-effective.

An aspect of the invention therefore relates to a method of manufacturing a plywood board for furniture for caravans, which comprises stacking an odd number of peeled poplar veneers which will constitute the core of the board, in which the veneers arranged in an even-numbered position are those which receive adhesive on both faces and have their grain perpendicular to the veneers arranged in an odd-numbered position. The method is characterized in that on the veneer core thus formed a first and a second engineered veneer is placed on the upper and lower faces of said core, respectively, to form the face and the back of the board, the assembly of veneers finally being pressed so that they remain attached to one another.

Another aspect of the invention relates to a plywood board suitable for manufacturing furniture for caravans, preferably produced by means of the method described above, and comprising a plywood core formed by an odd number of peeled poplar veneers, a face and a back arranged, respectively, on the surfaces of the core. The board is characterized in that said face and back are engineered veneers, and each of them preferably has a thickness of less than 0.8 mm.

Up until now, engineered veneers have been used exclusively for decorative purposes, and unlike natural veneers, they are produced artificially, and have the particularity that the wood used as the raw material comes from sustainably managed forests.

More specifically, engineered veneers are produced by making vertical cuts on a block formed by stacked wood veneers that are glued and pressed together. An engineered veneer is therefore formed by a plurality of narrow strips or strands of wood (poplar in this case) arranged in the same longitudinal direction of the board and attached to one another by means of glue.

Among the advantages of engineered veneer, its color, textural and structural consistency stand out, preserving the beauty and warmth of natural wood, and for this reason it has conventionally been used for manufacturing kitchen and cabinet doors, bathroom units and office furniture. Engineered veneer allows making better use of the raw materials, reducing waste production, due to the inexistence of knots, cracks, holes, gum, spots, etc., and replaces natural veneers in species such as teak, ebony or wenge, with the additional advantage of being more ecological as woods from sustainably managed forests are used for producing it.

Engineered veneer has endless color and texture combination possibilities either for accurately reproducing natural veneers or for creating new cutting-edge designs. A veneer grade classification is rendered unnecessary as the veneer grade is uniform. The person handling the product does not need to know as much about grades like in the case of a natural product. Minimum required stock levels drop because a single-grade product is supplied, thereby having a positive impact on service quality.

Therefore, the finished plywood board with a face and a back made of engineered veneer according to the invention has the following advantages for being applied as a laminated product in manufacturing caravan components with respect to the known state of the art:
- hardness and surface quality that are superior to African nutmeg;
- no knots or cracks and no need to perform any repair with putty;
- better behavior against moisture than MDF;
- more lightweight than MDF and having higher screw withdrawal strength;
- available in variable thicknesses which allow adjusting cost/performance depending on the location/use of the component in the caravan;
- manufactured from poplar veneer coming from sustainable plantations.

### Description of the Drawings

Figure 1 shows a perspective view of a board portion according to the invention.
Figure 2 shows an elevational view of a board portion according to the invention.

### Preferred Embodiment of the Invention

To manufacture a plywood board for furniture for caravans that is provided with faces and backs made of engineered veneer according to the invention, the manufacture of engineered veneer has been adapted to this particular use.

Engineered veneer or man-made veneer is conventionally intended for decorative use, and is therefore of a high quality; however, in the present invention, a lower-cost, non-decorative veneer has been developed, and the veneer is manufactured using a simpler process that does not include dyeing, uses cost-effective poplar veneer, and which is produced in a single reference. The advantage of this particular adaptation can be seen by the fact that the cost of this adapted engineered veneer is around 800€/m³ compared to the more than 3000€/m³ for conventional decorative engineered veneer.

The density of this veneer is about 550 kg/m³ and its hardness is increased by the glue lines between veneers, where a compromise has been achieved between the thickness of the veneer and its impact on the following parameters: surface hardness, cost and weight.

To manufacture these engineered veneers, peeled veneer sheets 0.8 to 2 mm thick, which are dyed and then adhered to one another, are first used. The sheets are then placed one on top of the other in a specific manner, depending on the structure to be attained, until forming a block of stacked veneers. This block is then vertically cut to produce veneers which usually measure 2.540 m or 3.440 m in length, 0.250 m or 0.620 m in width and 5.5/10 mm thick.

As explained above, calibration is part of the manufacturing process and it seeks to make the bulk along the entire surface of the board uniform, since the sum of tolerances of the thicknesses of the different veneers cause the board to come out of the press with "ridges and valleys", creating differences in thickness within the board. Calibration eliminates or reduces those differences by reducing the thickness of the bulk of the final faces in the "ridge areas." Finally, sanding reduces the roughness of the final veneer.

In the present invention, a new board finishing process has been developed in which sanding is performed exclusively, without calibration, which allows using veneers less than 0.7 mm thick for the face and the back. Additionally, this sanding process has been optimized by selecting a cross sanding technology which prevents defects in bulk which occur during calibration from appearing in the board along the engineered veneer grain, since longitudinal sanding of these engineered veneers would generate differences in caliber due to the difference in densities of the veneer groups used in manufacturing the engineered veneer.

The tolerance of the thicknesses of all the veneers forming the board had to be improved in order to reduce the variability of the bulk in each board, which is necessary to prevent variations in bulk that could cause the client to reject the lamination process, and to reduce the overall cost of the board since the cost of engineered veneer is somewhat higher than the cost of an African nutmeg veneer (800€/m³ compared to 700€/m³), and to thereby allow using veneers that are thinner than those used in African nutmeg (0.7 mm or less in engineered veneer compared to 1.0 mm in African nutmeg).

To that end, a series of improvements has been implemented in the peeling line, consisting of increasing the force of the press rod, changing the alloy of the blade for a harder one, sharpening the blade more often, optimizing the angle of attack of the blade and reducing log rotating speeds.

The composition of the glue used to manufacture the plywood board has also been adapted in the present invention. Given that a conventional engineered veneer has a very high formaldehyde emission, it cannot be used because the resulting board would have a formaldehyde emission greater than that allowed by European regulations that apply to this product.

Engineered veneer contains a considerable amount of adhesive which currently causes a high emission of this gas regulated by the UNE 717 standard. For the plywood board of this invention to comply with the provisions of these regulations, the following aspects of the conventional manufacturing process have been modified:
- changing the composition of the glue for manufacturing the plywood such that it includes formaldehyde sequestrants and a resin of a very low U/F molar ratio of Rm<1.04;
- changing the composition of the glue for manufacturing the plywood so that it includes a mixture of formaldehyde-free PVAc (polyvinyl acetate)-based adhesive substituting 70-90% of a urea-formol-based glue with Rm<1.04;
- treating the veneer with formaldehyde sequestrants before manufacturing the board and storing for at least 72 hours to give the product time to react. Furthermore, given that thicknesses of the engineered veneer of only 0.5 mm can be achieved, a dye has been incorporated to the adhesive glue to prevent the dark knots of the inner veneer from becoming visible, so the dye conceals any possible changes in hue.

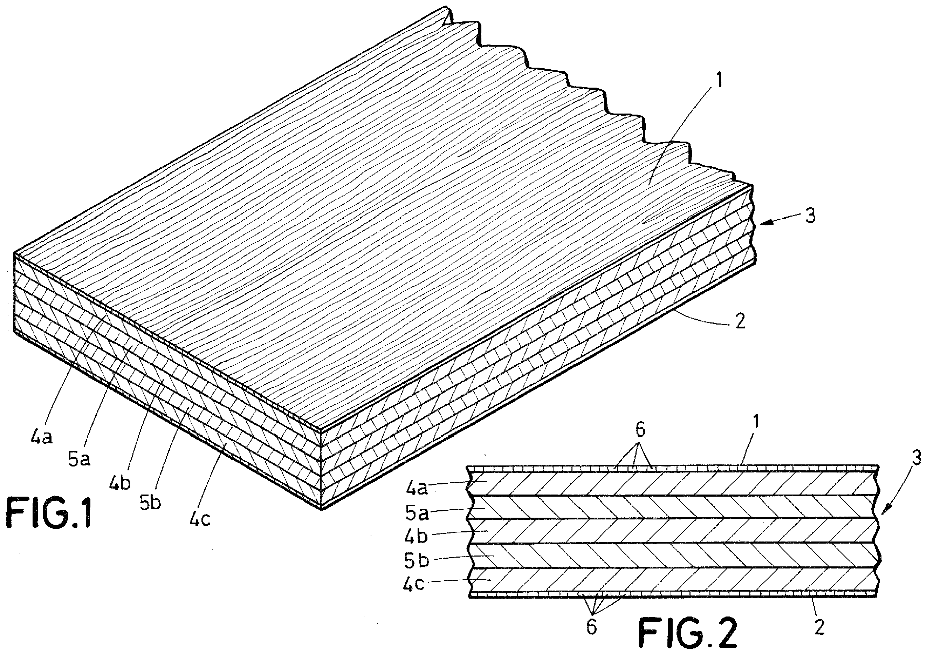

Figures 1 and 2 show a preferred embodiment of a plywood board according to the invention, comprising a plywood core (3) formed by an odd number of peeled poplar veneers, preferably five veneers, placed with the grain being placed in opposing directions in an alternating manner, such that three veneers arranged in an odd-numbered position (central veneers) (4a, 4b, 4c) and two veneers arranged in an even-numbered position (counter-veneers) (5a, 5b) are defined.

The board further comprises a face (1) and a back (2) attached, respectively, to the upper and lower surfaces of the core (3). As seen in the drawings, said face and back (1, 2) consist of engineered veneers, each of which is formed by a plurality of narrow strips or strands (6) of wood (poplar in this case), arranged in the same direction, attached to one another by means of glue, and produced by means of the cutting process described above.

## Claims

1. Method of manufacturing a plywood board for furniture for caravans, which comprises stacking an odd number of peeled poplar veneers, in which the veneers arranged in an even-numbered position, which receive adhesive on both faces, have their grain perpendicular to the veneers arranged in an odd-numbered position, forming a veneer core, **characterized in that** on the veneer core thus formed a first and a second engineered veneer is placed on the upper and lower faces of said core, respectively, to form the face and the back of the board, the assembly of veneers being pressed so that they stay attached to one another.

2. Method according to claim 1, wherein the first and second engineered veneers forming the face and the back have a thickness of less than 0.8 mm.

3. Method according to claim 1, wherein the engineered veneer was produced from a stack of peeled sustainable wood veneers glued, pressed and cut vertically to produce engineered veneer sheets.

4. Method according to any of claims 1 to 3, wherein the thickness of the engineered veneers is within the range of 0.5 to 0.7 mm.

5. Method according to claims 1 and 3, wherein the glue used for producing the plywood board and the engineered veneer comprises formaldehyde sequestrants and a synthetic resin.

6. Method according to claim 5, wherein the glue comprises a formaldehyde-free polyvinyl acetate (PVAc) base substituting 70-90% of a urea-formol-based glue with a molar ratio Rm of less than 1.04.

7. Method according to any of the preceding claims, wherein after the pressing stage, the visible faces of the engineered veneers are subjected to cross sanding with respect to the longitudinal direction of the wood strips of the engineered veneers.

8. Method according to claim 3, wherein the veneers of the block have a thickness comprised between 0.8 and 2 mm and are preferably poplar veneers.

9. Method according to claim 3, wherein the veneers of the block originate from the peeling of sustainable wood logs.

10. Method according to claim 1, wherein the core of the plywood is formed by five peeled poplar log veneers.

11. Plywood board suitable for manufacturing furniture for caravans, comprising a plywood core formed by an odd number of peeled poplar veneers, a face and a back arranged, respectively, on the surfaces of the core, **characterized in that** said face and back are engineered veneers and each of them has a thickness of less than 0.8 mm.

12. Plywood board according to claim 12, wherein the engineered veneer originates from vertically cutting into sheets a plurality of peeled log veneers coming from sustainable wood species.
